# EUROPÄISCHE PATENTSCHRIFT

(11) **EP 0 605 749 B1**
(45) Veröffentlichungstag und Bekanntmachung des Hinweises auf die Patenterteilung: **17.09.1997**
(21) Anmeldenummer: 93100150.7
(22) Anmeldetag: 07.01.1993
(51) Int. Cl.: A01G 31/00, A01G 31/02

(54) **Verfahren zur hydroponischen Anzucht von Pflanzen und Einrichtung zur Durchführung dieses Verfahrens**
Process for hydroponic culture of plants and device for carrying out said process
Procédé pour la culture hydroponique de plantes et procédé pour sa mise en oeuvre

(43) Veröffentlichungstag der Anmeldung: 13.07.1994
(73) Patentinhaber: Aldokimov, Anatoly Semenovich, Kramatorsk (UA); Aldokimov, Ivan Anatolievich, Kramatorsk (UA); Aldokimov, Vyacheslav Anatolievich, Kramatorsk (UA)
(72) Erfinder: Aldokimov, Anatoly Semenovich, Kramatorsk (UA); Aldokimov, Ivan Anatolievich, Kramatorsk (UA); Aldokimov, Vyacheslav Anatolievich, Kramatorsk (UA)
(74) Vertreter: Füchsle, Klaus, Dipl.-Ing.

(56) Entgegenhaltungen:
- EP-A- 0 363 168
- EP-A- 0 380 734
- EP-A- 0 500 484
- DE-B- 1 256 471
- US-A- 2 810 988

## Beschreibung

Die Erfindung betrifft ein Verfahren zur hydroponischen Anzucht von Pflanzen gemäß dem Oberbegriff des Anspruchs 1 und eine Einrichtung zur hydroponischen Anzucht von Pflanzen gemäß dem Oberbegriff des Anspruchs 5.

Ein Verfahren gemäß dem Oberbegriff des Anspruchs 1 ist in der DE-A-1 256 471 offenbart, die eine Einrichtung zur Durchführung eines Verfahrens zur hydroponischen Anzucht von Pflanzen zeigt, bei der eine Nährlösung durch Aerosolberieselung der Oberfläche eines Substrats zugeführt wird, das in mehreren übereinander angeordneten Vegetationsbehältern enthalten ist. Die Zuführung der Nährlösung erfolgt von einer Pumpe zu mehreren, über den Vegetationsbehältern angeordneten Rohren, die mit Löchern versehen sind. Mit Hilfe der gezeigten Einrichtung und des dadurch auszuführenden Verfahrens kann jedoch die Berieselung mit Nährlösung nicht wirksam reguliert werden. Darüber hinaus behindert bei der bekannten Anordnung die horizontal übereinanderliegende Anordnung der Vegetationsbehälter den Wuchs hoher Pflanzen. Außerdem besteht ein weiterer Nachteil darin, daß die Nährlösung durch die Berieselung von oben auf die Früchte der Pflanzen trifft, was nicht erwünscht ist.

Eine Vorrichtung gemäß dem Oberbegriff des Anspruchs 5 ist aus der EP-A-500 484 zu entnehmen. Aus dieser Druckschrift ist ein Verfahren und eine Vorrichtung bekannt, bei denen mittels einer Pumpe die Nährlösung aus einem Sammelbecken zu Vegetationsbehältern geführt wird. Es ist ferner ein Abflußrohr gezeigt, das in einem untersten Behälter die abfließende Nährlösung auffängt und in das Sammelbecken zurückleitet. Auch mit Hilfe der in dieser Druckschrift gezeigten Anordnung kann keine wirksame Regelung der Berieselungsperiodizität des Aerosols erfolgen, und es kann weiterhin nicht vermieden werden, daß sich die Nährlösung in den einzelnen Behältern staut, was zu einer unerwünschten Überwässerung der Behälter führt.

Es ist ein Verfahren zur aerisch-wäßrigen Anzucht von Pflanzen bekannt (SU, A, 1319793), das ihre Unterbringung und Festhaltung in Vegetationsgefäßen umfaßt, welche in Form von horizontal liegenden Rohren mit Löchern in den Wänden zur Aufnahme von Pflanzen ausgebildet sind. Über die Rohre wird mit einer bestimmten Periodizität eine Nährlösung unter nachfolgendem Abfluß derselben und Halten der Pflanzen ohne Lösung zugeführt.

Das bekannte Verfahren weist wesentliche Nachteile auf; im besonderen schafft der Einsatz von Rohren als Vegetationsgefäße Unbequemlichkeiten bei Verwendung der Einrichtung unter häuslichen Verhältnissen. Außerdem ist es bei ihnen unmöglich, die Entwicklung von Pflanzen zu überwachen, was zur Erkrankung und zum Eingehen der Pflanzen führen kann. Dies hängt insbesondere damit zusammen, daß in der Periode der Füllung der Rohre mit der Nährlösung unvermeidlich ein Sauerstoffhunger der Pflanzen entsteht, was sich auf deren Entwicklung und letzten Endes auf die Ertragfähigkeit negativ auswirkt.

Bekannt sind auch ein Verfahren und eine Einrichtung zur hydroponischen Anzucht von Pflanzen (JP, B, 60-40807), wobei die Einrichtung einen Vegetationsbehälter mit Nährlösung und mit einer Vorrichtung zur Sauerstoffsättigung des Nährmediums im Vegetationsgefäß enthält. Trotzdem bei dieser Einrichtung die Sauerstoff zufuhr zum Wurzelsystem der Pflanzen verbessert ist, ist in ihr ein Nachteil nicht behoben, der mit dem möglichen Verfaulen des in die Lösung ständig eingetauchten Wurzelsystems zusammenhängt.

Es ist außerdem eine Einrichtung zur hydroponischen Anzucht von Pflanzen bekannt (SU, A, 917805), die einen Nährlösungs-Sammler, eine Pumpe und einen Vegetationsbehälter mit Abflußrohr enthält, in dessen oberem Teil ein Nährlösungs*-*Verteiler angeordnet ist, der als auf der unteren Seite gelochtes Rohr ausgebildet ist, wobei die Pumpe einerseits mit dem Nährlösungs-Verteiler und andererseits mit dem Nährlösungs*-*Sammler verbunden ist.

Einen Nachteil dieser Einrichtung bildet die ungleichmäßige Befeuchtung des Substrats, was die Folge davon ist, daß sie nur längs der langen Seiten des Behälters ohne Zwangszuführung der Lösung geschieht, sowie die eventuelle Verstopfung der Löcher im Rohr wegen eines spaltfreien Verfahrens der Nährlösungszuführung zum Substrat. Beim Begießen im Selbstfluß lagert sich überdies der größte Teil von Nährstoffen in Form eines Niederschlags im Nährlösungs*-*Zufuhrsystem ab.

Aufgabe der Erfindung ist es, die obengenannten Nachteile zu beseitigen, im besonderen das Wachstum der Pflanzen zu verbessern und ihre Ertragfähigkeit unter gleichzeitiger Vereinfachung der Konstruktion der Einrichtung zu steigern.

Die Aufgabe der Erfindung wird dadurch gelöst, daß man die Zuführung der Nährlösung durch Aerosolberieselung der Oberfläche des Substrats mit einer Berieselungsperiodizität und -dauer in Abhängigkeit von der Temperatur der Umgebungsluft zustandebringt. Für den Fall, daß die Temperatur der Umgebungsluft in den Grenzen von 18 bis 22°C liegt, führt man dabei die Berieselung während 50 bis 70 Sekunden mit einem Intervall von 10-14 Minuten durch. Bei einer Umgebungslufttemperatur von 23 bis 29°C nimmt man die Berieselung während 30 bis 50 Sekunden mit einem Intervall von 6-10 Minuten vor, und bei einer Temperatur über 29°C - während 10 bis 30 Sekunden mit einem Intervall von 2-6 Minuten.

Das erfindungsgemäße Verfahren zur hydroponischen Anzucht von Pflanzen wird mit Hilfe einer Einrichtung durchgeführt, bei der ein gelochtes Rohr, das sich im oberen Teil eines Vegetationsbehälters befindet, in einem gewissen Abstand von der Substratoberfläche angeordnet ist, wobei die Gesamtfläche der Löcher am Rohr kleiner als die Querschnittsfläche eines Abflußrohres ist.

Um den Effekt des Verspritzens der Nährlösung zu erhöhen, die über das Rohr zugeführt wird und in Form von Strahlen durch dessen Löcher auf die Oberfläche des Substrats austritt, wird vorgeschlagen, daß die auf der unteren Seite des Rohres angebrachten Löcher nacheinander unter einem Winkel von etwa 45° nach der einen und der anderen Seite von einer Vertikalebene aus gerichtet sind, die mittig längs des Rohres verläuft.

Die Erfindung wird mit Hilfe von Zeichnungen ausführlicher erläutert, in denen eine erfindungsgemäße Einrichtung zur hydroponischen Anzucht von Pflanzen dargestellt ist, wo es zeigt:

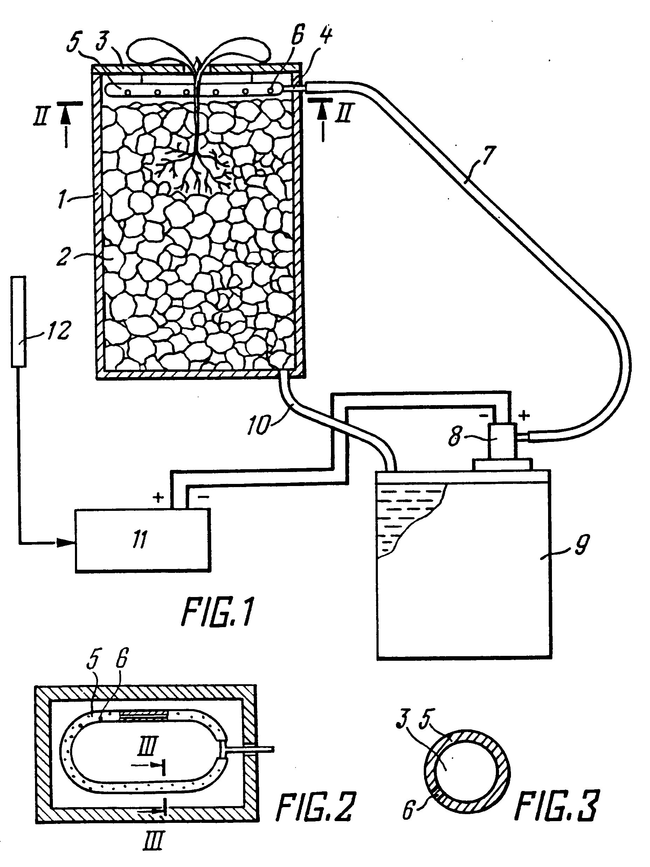

Fig. 1 die erfindungsgemäße Einrichtung im teilweisen Schnitt;
Fig. 2 eine Ansicht nach Linie II - II von Fig. 1;
Fig. 3 einen Schnitt des Verteilerrohres nach Linie III - III der Fig. 2.

Die Einrichtung zur Anzucht von Pflanzen enthält einen Vegetationsbehälter 1, in dem eine Pflanze untergebracht wird, welche mit Hilfe eines Substrats 2 darin festgehalten ist. Oben ist der Behälter mit einem Deckel 3 verschlossen, durch den der über der Erde befindliche Teil der Pflanzen hindurchgeführt ist. Im oberen Teil der Wand des Behälters 1 ist eine Öffnung fur ein Rohr 4 vorhanden, das die Nährlösunge einem Verteiler 5 zuführt, welcher sich in einem gewissen Abstand von der Oberfläche des Substrats 2 befindet. Der Verteiler 5 ist am Deckel 3 starr befestigt und in Form eines Polyvinylrohres ausgeführt, auf dessen unterer Seite Löcher 6 vorgesehen sind. Die Löcher 6 sind unter einem Winkel von etwa 45° in bezug auf eine mittig längs des Rohres verlaufende Ebene angeordnet und wechselweise nach der einen und der anderen Seite bezüglich dieser Ebene gerichtet. Das Rohr 4 ist mittels eines flexiblen Schlauchs 7 mit einer Pumpe 8 verbunden, welche die Nährlösung aus einem Sammler 9 fördert, während im Boden des Vegetationsbehälters 1 eine Ausflußöffnung vorhanden ist, durch die ein Abflußrohr 10 geführt ist, das mit dem Nährlösungssammler 9 in Verbindung steht. An die Pumpe 8 ist eine Programmsteuereinrichtung 11 angeschlossen.

Innerhalb des Vegetationsbehalters 1 und am Fenster, wo die Einrichtung aufgestellt wird, sind Thermopaare 12 angeordnet, die mit der Programmsteuereinrichtung 11 verbunden sind.

Die Anzucht von Pflanzen geht in der erfindungsgemäßen Einrichtung folgenderweise vonstatten.

Im Vegetationsbehälter 1 werden die Setzlinge von Pflanzen untergebracht und darin mittels des Substrats 2 festgehalten, mit welchem der ganze Behälter 1 ausgefüllt wird. Als Substrat kann beispielsweise Keramsit verwendet werden. Der über der Erde befindliche Teil der Pflanzen ist durch den Deckel 3 hindurchgeführt, mit dem der Behälter 1 von oben her verschlossen wird. Am Deckel 3 ist der Nährlösungs-Verteiler 5 befestigt, der nach der Befestigung des Deckels 3 in einem gewissen Abstand von der Oberfläche des Substrats 2 zu stehen kommt. Der Abstand zwischen dem Deckel und der Oberfläche des Substrats 2 wird solcherweise gewählt, daß die Nährlösungsstrahlen, welche aus den auf der unteren Seite des Rohres des Verteilers 5 vorhandenen Löchern austreten, ohne Druckhöhenverlust auf die Oberfläche des Substrats 2 aufschlagen und beim Aufschlag ein feindisperses Nährlösungsmedium bilden, das nicht nur die Oberflächenschicht des Substrats befeuchtet, sondern auch auf dessen gesamte Tiefe eindringt und das Substrat in feuchtem Zustand unterhält.

Ein sich bildender Nährlösungsüberschuß fließt über das Abflußrohr 10 in den Sammler 9 zurück. Da die Gesamtfläche sämtlicher Löcher, durch welche die Nährlösung zugeführt wird, kleiner als der Querschnitt des Abflußrohres 10 ist, wird gewährleistet, daß der Vegetationsbehälter 1 nicht mit der Lösung gefüllt wird, sondern nur das Substrat befeuchtet, was sich auf die Entwicklung der Pflanzen günstig auswirkt.

Die Programmsteuereinrichtung 11 arbeitet in der zyklischen Betriebsart nach einem der drei gewählten Programme in der automatischen Variante in Abhängigkeit von den klimatischen Verhältnissen und der Umgebungstemperatur. Der Befehl für die Umschaltung des Befeuchtungsregimes des Substrats 2 im Behälter 1 kommt von den Thermopaaren 12, die mit der Programmsteuereinrichtung 11 in Verbindung stehen.

Bei der Arbeit der Anlage schaltet die Programmsteuereinrichtung 11 eines der Programme je nach der Umgebungstemperatur ein, wobei die Pumpe 8 beginnt, die Nährlösung über den Verteiler 5 zu fördern. Bei einer Temperatur von z.B. 20°C fördert die Pumpe 8 die Nährlösung während 60 Sekunden, wonach sie für 12 Minuten abgeschaltet wird. Der Nährlösungsüberschuß wird über das Abflußrohr 10 in den Sammler zurückgeführt, und das Wurzelsystem erhält die Nahrung in Form eines Aerosolnährmediums. Dann wiederholt sich der Zyklus. Wenn sich die Umgebungstemperatur verändert hat, beginnt die Einrichtung in einem anderen Betriebszustand zu arbeiten.

Je höher die Umgebungstemperatur ist, um so intensiver findet die Verdampfung der Feuchtigkeit über das Laub statt. Hieraus ergibt sich die Notwendigkeit einer zusätzlichen häufigeren Berieselung des Substrats mit der Nährlösung bei kleineren Intervallen, damit das Wurzelsystem die Ernährung mit Luft und Lösung besser aufnimmt.

Die Anzucht von Gemüse nach dem erfindungsgemäßen Verfahren schließt eine Überflutung des Wurzelsystems mit der Lösung aus, weil der Querschnitt des Abflußrohres größer als die Gesamtfläche der Löcher am gelochten Rohr des Verteilers 5 ist. Der Einsatz der erfindungsgemäßen Einrichtung bietet die Möglichkeit, die Ernährung des Wurzelsystems mit der Nährlösung und dem Luftsauerstoff zu vereinigen, was sich auf die Entwicklung einer Pflanze und deren Ertragfähigkeit positiv auswirkt.

Die Anwendung der beschriebenen Erfindung gestattet es, die Ertragfähigkeit von Pflanzen gegenüber den bekannten Verfahren und Einrichtungen zur hydroponischen Anzucht von Pflanzen um 20 bis 30% zu steigern.

Darüber hinaus ist die geschilderte Einrichtung viel einfacher in der Herstellung, was seinen Preis verringert. Die durchsichtige Ausführung der Frontplatte mit einem Ziervorhang zum Schutz vor Lichteinwirkung erlaubt es, die Entwicklung des Wurzelsystems und die Zuführung der Nährlösung zu beobachten und bei irgendwelchen unvorhergesehenen Abweichungen operativ einzugreifen.

Das erfindungsgemäße Verfahren und die Anlage zu seiner Durchführung sind zur Anzucht von Gemüse in Treibhäusern sowie in Wohnräumen bestimmt und können durchaus von einer in diesen Räumen wohnenden Familie bedient werden.

## Patentansprüche

1. Verfahren zur hydroponischen Anzucht von Pflanzen in einem mit einem Substrat ausgefüllten Vegetationsbehälter mit der Zuführung einer Nährlösung in die Zone der Wurzelernährung durch Aerosolberieselung der Oberfläche des Substrats,
dadurch **gekennzeichnet,**
daß man die Zuführung der Nährlösung mit einer Berieselungsperiodizität und -dauer in Abhängigkeit von der Temperatur der Umgebungsluft zustandebringt.

2. Verfahren nach Anspruch 1, dadurch **gekennzeichnet**, daß man bei einer Temperatur der Umgebungsluft von 18 bis 22°C die Berieselung während 50 bis 70 Sekunden mit einem Intervall von 10-14 Minuten durchführt.

3. Verfahren nach Anspruch 1, dadurch **gekennzeichnet**, daß man bei einer Temperatur der Umgebungsluft von 23 bis 29°C die Berieselung während 30 bis 50 Sekunden mit einem Intervall von 6-10 Minuten durchführt.

4. Verfahren nach Anspruch 1, dadurch **gekennzeichnet**, daß man bei einer Temperatur der Umgebungsluft über 29°C die Berieselung während 10 bis 30 Sekunden mit einem Intervall von 2-6 Minuten durchführt.

5. Einrichtung zur hydroponischen Anzucht von Pflanzen zur Durchführung des Verfahrens nach den Ansprüchen 1 bis 4, die einen Nährlösungs-Sammler (9), eine Pumpe (8) und einen Vegetationsbehälter (1) mit Abflußrohr (10) enthält, in dessen oberem Teil ein Nährlösungs-Verteiler (5) angeordnet ist, der in einem Abstand von der Oberfläche des Substrats angeordnet ist, wobei die Pumpe einerseits mit dem Nährlösungs-Verteiler (5) und andererseits mit dem Nährlösungs-Sammler (9) verbunden ist,
dadurch **gekennzeichnet,** daß der Verteiler (5) als unten gelochtes Rohr ausgebildet ist, und daß die Gesamtfläche der Löcher am Rohr des Verteilers (5) die Querschnittsfläche des Abflußrohres (10) unterschreitet.

6. Einrichtung nach Anspruch 5, dadurch **gekennzeichnet**, daß die Löcher am Rohr des Verteilers (5) nacheinander unter einem Winkel von etwa 45° nach der einen oder der anderen Seite von einer Vertikalebene aus angeordnet sind.

## Claims

1. A method for the hydroponic culture of plants in a growing container filled with a substrate, comprising the supply of a nutrient solution into the root feeding zone by aerosol-spraying the surface of the substrate, characterised in that the supply of the nutrient solution is effected with a spraying periodicity and duration in dependence on the temperature of the ambient air.

2. A method according to claim 1, characterised in that, at a temperature of the ambient air of 18 to 22°C, the spraying is performed for 50 to 70 seconds with an interval of 10-14 minutes.

3. A method according to claim 1, characterised in that, at a temperature of the ambient air of 23 to 29°C, the spraying is performed for 30 to 50 seconds with an interval of 6-10 minutes.

4. A method according to claim 1, characterised in that, at a temperature of the ambient air above 29°C, the spraying is performed for 10 to 30 seconds with an interval of 2-6 minutes.

5. A device for the hydroponic culture of plants, for implementing the method according to claims 1 to 4, which comprises a nutrient solution collector (9), a pump (8) and a growing container (1) with drainage pipe (10), in whose upper part is arranged a nutrient solution distributor (5) which is positioned at a distance from the surface of the substrate, the pump being connected, on the one hand, to the nutrient solution distributor (5) and, on the other hand, to the nutrient solution collector (9), characterised in that the distributor (5) is in the form of a downwardly perforated pipe, and in that the total area of the holes in the pipe of the distributor (5) is less than the cross-sectional area of the drainage pipe (10).

6. A device according to claim 5, characterised in that the holes in the pipe of the distributor (5) are successively arranged at an angle of about 45° towards the one or the other side away from a vertical plane.

## Revendications

1. Procédé de culture hydroponique de plantes dans un récipient à végétation rempli d'un substrat, avec apport d'une solution nutritive dans la zone de nourissement des racines par arrosage aérosol de la surface du substrat,
caractérisé en ce que l'on effectue l'apport de solution nutritive suivant une périodicité et une durée d'arrosage qui sont fonction de la température de l'air ambiant.

2. Procédé selon la revendication 1, caractérisé en ce que l'on effectue l'arrosage pour une température de l'air ambiant comprise entre 18 et 22°C, pendant une durée de 50 à 70 secondes avec un intervalle de 10 à 14 minutes.

3. Procédé selon la revendication 1, caractérisé en ce que l'on effectue l'arrosage pour une température de l'air ambiant comprise dans la plage entre 23 et 29°C, pendant une durée de 30 à 50 secondes avec un intervalle de 6 à 10 minutes.

4. Procédé selon la revendication 1, caractérisé en ce que l'on effectue l'arrosage, pour une température de l'air ambiant supérieure à 29°C, pendant une durée de 10 à 30 secondes avec un intervalle de 2 à 6 minutes.

5. Dispositif de culture hydroponique de plantes pour la mise en oeuvre du procédé selon les revendications 1 à 4, comprenant un collecteur de solution nutritive (9), une pompe (8) et un récipient à végétation (1) muni d'un tube d'évacuation (10) et dans la partie supérieure duquel est disposé un distributeur de solution nutritive (5) qui est placé à certaine distance de la surface du substrat, la pompe étant reliée, d'une part, au distributeur de solution nutritive (5) et, d'autre part, au collecteur de substance nutritive (9),
caractérisé en ce que le distributeur (5) est réalisé sous la forme d'un tube perforé à la partie inférieure, et en ce que la surface totale des trous ménagés sur le tube du distributeur (5) présente une aire inférieure à celle de la section transversale du tube d'évacuation (10).

6. Dispositif selon la revendication 5, caractérisé en ce que les trous ménagés sur le tube du distributeur (5) sont disposés les uns après les autres en faisant un angle d'environ 45° vers l'un ou l'autre côté par rapport au plan vertical.
